# EUROPÄISCHE PATENTANMELDUNG

(11) **EP 3 626 418 A1**
(43) Veröffentlichungstag der Anmeldung: **25.03.2020**
(21) Anmeldenummer: 18195207.8
(22) Anmeldetag: 18.09.2018
(51) Int. Cl.: B27N 1/00, B27K 5/00, B27N 1/02

(54) **VERFAHREN UND VORRICHTUNGEN ZUM HERSTELLEN VON PRODUKTEN UNTER VERWENDUNG LIGNOCELLULOSEHALTIGER PARTIKEL**

(71) Anmelder: PolymerTrend LLC., Orchard Park, NY 14127 (US)
(72) Erfinder: Zaher, Max, 21682 Stade (DE); Schwarz, Wolfgang, 21682 Stade (DE); Prof. Thole, Volker, 21682 Stade (DE)
(74) Vertreter: Gunzelmann, Rainer

(57) **Zusammenfassung**

Die Erfindung betrifft ein Verfahren und Vorrichtungen zum Herstellen von Produkten (65) unter Verwendung cellulosehaltiger Partikel, mit denen folgende Schritte ausgeführt werden:
a) Bestrahlen der Partikel mit Elektronen im Energiebereich > 1 MeV;
b) Mischen der bestrahlten Partikel mit elektronenstrahlreaktivem Pulver aus einem synthetischen Polymer, insbesondere einem Thermoplast, mit Pulverpartikelgrößen < 2000 Mikrometer (µm) und/oder mit einem flüssigen elektronenstrahlreaktiven synthetischen oder biobasierten Polymer;
c) Formen dererzeugten Mischung entsprechend der Form des herzustellenden Produktes, insbesondere Formen zu einem Vlies (56);
d) Erhitzen der geformten Mischung auf 100 -180 °C;
e) Pressen der geformten Mischung; und
f) Bestrahlen der gepressten Mischung mit Elektronen im Energiebereich van 1 MeV bis 10 MeV sowie entsprechend gewählten Dosen und Dosisraten.

## Beschreibung

Die Erfindung betrifft Verfahren und Vorrichtungen zum Herstellen von Produkten unter Verwendung von lignocellulosehaltigen Partikeln. Insbesondere betrifft die Erfindung ein Verfahren zum Herstellen einer Mischung aus lignocellulosehaltigen Partikeln mit elektronenstrahlreaktiven synthetischen Polymeren in Pulverform und/oder elektronenstrahlreaktiven synthetischen und/oder biobasiert teilsynthetischen polymeren Flüssigkeiten, ein Verfahren zum Herstellen eines lignocellulosehaltigen Formteils, eine Vorrichtung zum Vorbehandeln und von zur Mischung mit elektronenstrahlreaktivem Pulver aus einem Polymer und/oder einer elektronenstrahlreaktives Polymer enthaltenden Flüssigkeit geeigneten lignocellulosehaltigen Partikeln und eine Vorrichtung zum Herstellen eines Verbundwerkstoffes unter Verwendung von lignocellulosehaltigen Partikeln.

Als lignocellulosehaltige Partikel kommen hier insbesondere in Betracht Substanzen aus Holz oder aus nichtholzhaltigen Pflanzen oder auch ein Gemisch aus solchen, z. B. in Form von Spänen, Fasern, sogenannten Strands oder Flakes. Die hier genannten Partikel umfassen also insbesondere holzhaltige und holzartige Späne und Fasern.

Unter Holzspänen oder Holzfasern bzw. holzartigen Spanen oder Fasern sind hier insbesondere native zellulosehaltige Rohstoffe zu verstehen, wie beispielsweise Holz diverser Baumarten und Provenienz (frisch, alt oder recycelt).

Weitere Beispiele für holzartige Späne bzw. Fasern im Sinne dieser Beschreibung sind Bambus, Stroh von Mais oder Cerealien, Faserpflanzen wie Flachs oder Jute.

Der Einsatz von ionisierender Strahlung zur Behandlung, insbesondere zum Aufschluss nativer zellulosehaltiger Rohstoffe für verschiedene Weiterverarbeitungszwecke ist als solches bekannt. Beispiele sind die Schädlingsdekontamination, die Erleichterung des sogenannten Refining bzw. des Faseraufschlusses in der Papierherstellung oder auch die Beschleunigung von Verzuckerung und Fermentation, z. B. bei der Gewinnung von Bioethanol.

Insbesondere betrifft die Erfindung die Herstellung von Spanplatten und MDF-/HDF-Platten.

Im Stand der Technik bekannt ist hierfür der Einsatz eines Zerhackers zum Zerkleinern der holzartigen Ausgangsstoffe, eines Zerspaners zum Erzeugen von Spänen, eines Siebes zum Bestimmen der Span- bzw. Fasergrößen, einer Waschanlage, eines sogenannten Defibrators (bei MDF-Herstellung), einesTrockners, eines Mixers zum Mischen der Späne bzw. Fasern miteinem Bindemittel, insbesondere der Komponente Formaldehyd, einer Anlage zurVlieserzeugung,einerVorpresse, und einerVollpresse mitErhitzung aufz. B. 220°C sowie Mitteln zur Nachbehandlung der Spanplatten bzw. MDF-/HDF- Platten. Hierbei ist der Einsatz von Formaldehyd problematisch hinsichtlich Gesundheitsschutz und Brandgefährdung.

Der Stand derTechnik istinsbesondere bezüglich folgender Eigenschaften und Parameter zu verbessern:
Produktivität bei der Herstellung, Energieaufwand, erforderliche Temperaturen, Misch- und Bindezeiten, Kühlzeiten, Dickenquellung, Abrieb- und Biegefestigkeit (E-Modul), Querzugfestigkeit, Weiterbearbeitungserleichterung, UV-Schutz, Wechselklima- und Feuchtigkeitsbeständigkeit, Bioresistenz der Produkte gegen Sporen, Pilze, Insekten, Feuerschutz, Gesundheitsschutz, etc.

Der Erfindung liegt die Aufgabe zugrunde, Verfahren und Vorrichtungen bereitzustellen, mit denen einige der vorstehend genannten Ziele bei der Verarbeitung von holzartigen Spänen und Fasern zu Holzverbundwerkstoffen zumindest teilweise erreicht werden.

Zunächst betrifft die Erfindung ein Verfahren und eine Vorrichtung zur Herstellung eines Zwischenproduktes bei der Herstellung von Holzverbundwerkstoffen, nämlich die Herstellung von Holz- oder holzartigen Spänen oder Fasern, die sich zur Mischung mit einem elektronenstrahlreaktiven Pulver aus einem synthetischen Polymer und/oder zur Mischung mit einem flüssigen elektronenstrahlreaktiven synthetischen oder biobasierten Polymer eignen.

Hierzu lehrt die Erfindung eine Bestrahlung der Späne bzw. Fasern mit hochenergetischen Elektronen erforderlicher Dosis, vorzugsweise unter Normaldruck an Luft.

Eine der Erfindung zugrundeliegende Erkenntnis liegt darin, dassmiteinersolchen Bestrahlung die Späne bzw. Fasern besonders gut präpariert werden, um sich bei der Herstellung eines Holzverbundwerkstoffes wie Spanplatten oder MDF-/HDF-Platten mit einem Thermoplast vermischen zu lassen. Als besonderes geeignet erwiesen hat sich eine Bestrahlung mit Elektronen im Dosisbereich von 50 bis 150 kGy an Luft.

Ein solcher Energieeintrag führt zum Aufsplitten von Faserbündeln, zu Bindungsbrüchen an und zwischen Molekülketten mit Ausbildung neuer sauerstoffhaltiger Gruppen, zur Abspaltung niedermolekularer Fragmente sowie zu neuen Molekülverkettungen zwischen den unterschiedlichen Holzbestandteilen (Cellulose, Hemicellulosen, Lignin). Hierdurch kann infolge simultaner Ozoneinwirkung an den vergrößerten und vermehrt hydrophilen Faseroberflächen eine erleichterte Adhäsion von zugemischten speziellen Polymeren in Pulver- oder Flüssigform stattfinden. Deren Auswahl ist darauf gerichtet, unter einer nachfolgenden Elektronenbestrahlung besonders leicht zu fragmentieren und neue, vorzugsweise dreidimensionale Bindungen bzw. stabile Netzwerke ("Crosslinking") auszubilden.

Die Beschleunigungsenergie der Elektronen (in MeV) ist hierbei der maßgebliche Parameter für deren Eindringtiefe in das zu bestrahlende Schüttgut bzw. in einen Feststoff. Die Eindringtiefe ist umgekehrt proportional zur Dichte des jeweiligen Bestrahlungsgutes, jedoch unterliegen die Elektronen auf diesem Weg zunehmender Abbremsung. Je höher die Beschleunigungsenergie, desto mehr Produktmenge bzw. Feststoffdicke kann erfasst und durchsetzt werden. Ist beispielsweise für holzartige Materialien eine Materialdichte von 1/cm³zugrunde gelegt, dann beträgt die effektive Eindringtiefe bei 1 MeV Beschleunigungsenergie etwa 2,8 mm, bei doppelseitiger Bestrahlung etwa 7 mm. Mit 10 MeV erfasst man 32 mm, doppelseitig etwa 80 mm Dicke infolge sich gegenseitig kreuzender Restelektronenströme.

Die erzeugte Elektronenmenge, der Strahlstrom (Maßeinheit in Milliampere mA), ist Quelle für die Strahlungsdosis: sie charakterisiert die Energiemenge in kGy, welche die Elektronen im Verlauf ihres Eindringweges und ihrer Abbremsung an das betroffene Target-Material abgeben, sie nimmt mit fortschreitender Tiefe zunehmend ab. Letztendlich unterschreitet sie eine Schwelle zur chemischen Unwirksamkeit bzw. erwünschten Prozessrelevanz. Insbesondere die Strahlungsdosis gilt es experimentell auf das Produktziel hin zu optimieren: wichtig ist die Reaktionssensibilität der als Bindemittel zum Holz hin ausgewählten strahlvernetzenden Polymere bzw. deren Mischungen, ihr Vernetzungsverhalten untereinander und die entstandene Produktgüte. Der Dosisinput pro Zeit, die Dosisrate, ist von der Leistungsfähigkeit des Elektronenstrahlers abhängig, die Dosisrate hat Einfluss auf das chemische Reaktionsgeschehen, im Wesentlichen jedoch ist sie betriebsökonomisch beachtenswert.

Elektronenstrahler als solche sind im Stand der Technik gut bekannt und seit langem in zahlreichen marktwirtschaftlichen Anwendungen präsent. Man unterscheidet je nach Einsatzbereich niederenergetische bis ca. 300 keV, dann mittlere, und ab ca. 3-5 MeV hochenergetische Strahler. Entsprechend dienen sie (bei dünnen Schichten) z.B. zur Oberflächensterilisation oder Lackhärtung, bei tieferer Materialbehandlung (mit MeV) ebenfalls zur Sterilisation/Dekontamination (Pakete), zum Schadstoffabbau in Abwässern, Degradation von pflanzlichen Rohstoffen z.B. zur Bioethanol-Gewinnung oder zur Polymervernetzung wie z.B. von Kompositwerkstoffen (WPC), Autoreifen oder Polyethylenröhren.

Das Bauprinzip besteht aus einer Glühkathode, aus welcher im Hochvakuum Elektronen emittiert und über eine Hochspannungs-Potentialkaskade zur Anode hin als Strahl fokussiert beschleunigt werden. Der Strahl ist zumeist gepulst und kann pro Puls mehrere hundert Milliwatt liefern. Durch elektromagnetische Ablenkung bei möglichst hohen Frequenzen wird der Strahl in einem Strahltrichter auf erstrebte Arbeitsbreiten aufgescannt und dringt durch ein Elektronenaustrittsfenster aus zumeist Titanfolie in die Prozesskammer, um bei Normaldruckatmosphäre seine Wirkung zu entfalten. Insbesondere hochenergetische Strahler bedingen einen umfangreichen Schutz vor der simultan erzeugten Röntgenstrahlung; d.h.: separate dickwandige Gebäude mit mehrfach gewinkelten Ein- und Ausfuhr-Transportstrecken für die zu bestrahlenden Güter.

Schutzmaßnahmen erfordert ebenfalls das bei Elektronenstrahlung an Luft entstehende Ozon-Gas, welches hochkorrosiv und gesundheitsschädigend wirkt.

Für effiziente industriell-technische Anwendungen, wo die Strahler leistungsstarke Strahlströme (Dosis, Dosisrate) und große Eindringtiefen (MeV) in die Targets erbringen müssen, gibt es unterschiedliche Ausführungen. Angebotene Bauarten benötigen Leistungsaufnahmen bis mehrere hundert Kilowatt; sie liefern bedarfsgerecht entsprechende Beschleunigungsenergien (MeV) und Strahlströme.

Linearbeschleuniger (LINACs) mit bis zu 10 MeV, Rhodotrons (7 MeV/700 kW bzw. 10 MeV/200 kW) oder Dynamitrons mit 5 MeV/300 kW sind auf dem Markt.

Die so mit Elektronenstrahlung präparierten Holz- bzw. holzartigen Späne und Fasern werden eingesetztfürein Verfahren zum Herstellen eines Holzverbundwerkstoffes.

Das Verfahren enthält zumindest die folgenden Schritte:
a) Bestrahlen von Holz- oder holzartigen Spänen oder Fasern an Luft mit Elektronen im Energiebereich > 1 MeV;
b) Mischen der vorbehandelten bestrahlten Späne bzw. Fasern mit einem elektronenstrahlreaktiven synthetischen Polymerpulver, insbesondere einem Thermoplast, mit Pulverpartikelgrößen < 2000 Mikrometer (µm) und/oder mit einem flüssigen elektronenstrahlreaktiven synthetischen oder biobasierten Polymer;
c) Formen der erzeugten Mischung entsprechend der Form des herzustellenden Holzverbundwerkstoffes, insbesondere Formen zu einem Vlies;
d) Erhitzen der geformten Mischung auf 100 - 180 °C;
e) Pressen der geformten Mischung; und
f) Bestrahlen der formgepressten Mischung mit Elektronen im Energiebereich von 1 MeV bis 10 MeV.

Als "elektronenstrahlreaktiv" im Sinne des Verfahrens für die Mischung mit den bestrahlten Spänen oder Fasern zwecks Herstellung eines Komposit-Produktes sind eine Vielzahl chemischer Verbindungen in flüssiger oder fester Form bekannt und einsetzbar. Gemeinsames Merkmal sind mittels Elektronenstrahlen über zumeist radikalische Reaktionsmechanismen leicht spaltbare chemische Bindungen und das Bestreben der Fragmente zur bevorzugten zwei- und dreidimensionalen Wiedervereinigung (Polymerisation, Crosslinking zu 3D-Netzwerken). Typische Polymerarten hierfür sind beispielsweise Low-Density-Polyethylene mittlerer Molekulargewichte (lineare Ketten ohne Doppelbindungen, LDPE) wie auch Polyvinylchlorid (PVC) oder Ethylenvinylacetat-Copolymere (EVA). Geeignete Verbindungsgruppen mit hochreaktiven chemischen Doppelbindungen stellen die Acrylate oder Vinyle, zumeist in flüssiger Form, dar. Diese wiederum können mit einer Vielzahl chemischer Partner kombiniert sein wie beispielsweise Epoxiacrylaten oder reaktiven siliziumorganischen Verbindungen. Darüber hinaus gibt es eine Vielzahl biobasierter Produkte bzw. Naturstoffe, wie z.B. native oder aufbereitete (biobasierte) Öle, welche insbesondere über Doppelbindungen verfügen und ebenfalls durch Initiierung mit Elektronenstrahlen zum Polymerisieren und/oder Vernetzen neigen.

Bedarfsmäßig kommen zwecks Güteverbesserung des Endproduktes geringfügige Zusatzmengen wie z.B. Haftverbesserer am Grundmaterial (Holzoberflächen), Mittel für Flammschutz, elektrische Leitfähigkeit, Hydrophobierungszusätze und/oder UV-Stabilisatoren zum Einsatz.

Es hat sich gezeigt, dass für die Zumischung eines pulverförmigen synthetischen Polymers, insbesondere Thermoplast, Pulverpartikelgrößen kleiner 2000 Mikrometer (µm) geeignet sind, insbesondere Partikelgrößen im Bereich von 1000 bis 1500 Mikrometer.
Ein Vorteil der Erfindung liegt darin, dass auf die im Stand derTechniktypischerweise verwendeten und mit dem gesundheitskritischen Formaldehyd versehenen Phenol- oder Harnstoff-Harze verzichtet werden kann.

Ein weiterer Vorteil der Erfindung hinsichtlich Energieaufwand und Produktivität liegt darin, dass bei der Herstellung des Holzverbundwerkstoffes gemäß Merkmal 3e) das Verpressen ohne erhebliche Erhitzung, insbesondere kalt, erfolgen kann.

Die anschließende Bestrahlung der verpressten Mischung mit Elektronen erfolgt im Elektronenergiebereich von 1 bis 10 MeV, vorzugsweise leistungsstark im Energiebereich von 5bis 10 MeV zur Vernetzung des Polymers in entsprechenden Schichtmengen. Der Dosisbereich liegt dabei vorzugsweise bei 50 bis 150 kGy. Die Parameter bezüglich Energie, Dosis und Dosisrate sind für das gegebene System experimentell zu optimieren; also in Abhängigkeit von z. B. der Holzart, der Zubereitung der Späne und Fasern, dem Feuchtigkeitsgehalt, der Art des elektronenstrahlreaktivvernetzbaren Polymers, dem Mischungsverhältnis Polymer-Holz wie auch der eingesetzten Polymersorten untereinander, Parametern der vorangegangenen Verpressung, der Resttemperatur und dem spezifischen Produktziel bzw. dessen Produktgüte.

Die Erfindung betrifft auch einen Holzverbundwerkstoff, der mit dem erfindungsgemäßen Verfahren hergestelitist, insbesondere eine Spanplatte oder eine MDF-/HDF- Platte (MDF: Mitteldichte Faserplatte; HDF: Hochdichte Faserplatte). Weitere Holzverbundwerkstoffe im Sinne der Erfindung sind das sogenannte OSB (Oriented Strand Board) und das Verbundmaterial WPC(Wood-Plastics-Composites).

Optional kann vor dem finalen Bestrahlen mit Elektronen die gepresste Platte dreidimensional nachgeformt werden.

Die Erfindung beinhaltet auch Vorrichtungen gemäß den Ansprüchen 15 bis 20.

Nachfolgend werden Ausführungsbeispiele der Erfindung mit Bezug auf die Figuren näher beschrieben.

Die Figuren 1 bis 3 erläutern ein Verfahren und eine Vorrichtung zum Herstellen von Spanplatten.

Die Figuren 4 und 5 erläutern ein Verfahren und eine Vorrichtung zum Herstellen von MDF-/HDF-Platten.

Nachfolgend werden zwei Ausführungsbeispiele der Erfindung näher beschrieben, nämlich die Herstellung von Holzverbundwerkstoffen in Form von Spanplatten und in Form von MDF-/HDF-Platten.

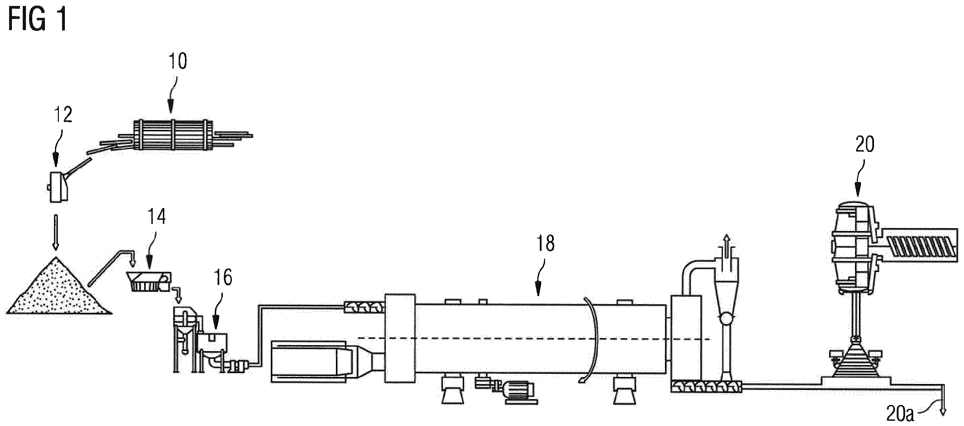

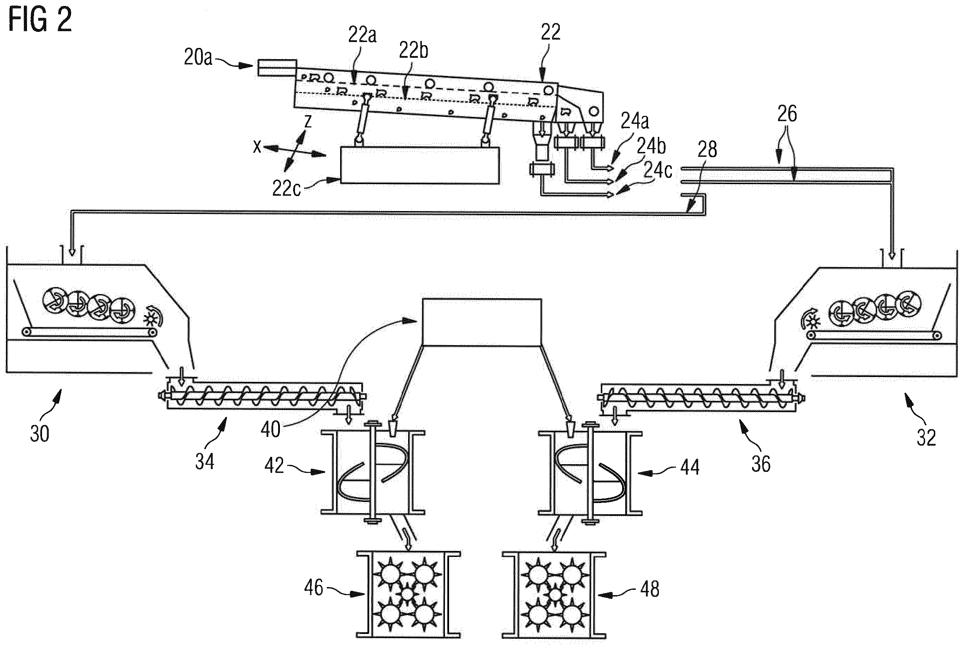

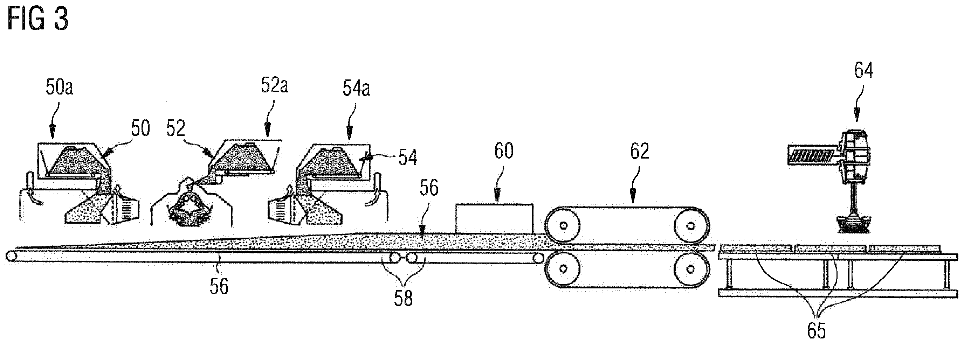

Die Figuren 1 bis 3 zeigen jeweils einen Abschnitt des Verfahrens bzw. der Vorrichtung im zeitlich- räumlichen Ablauf.

Ein Zerhacker (10) zerhackt Rohholz. Danach verarbeitet ein Zerspaner (12) das zerhackte Holz zu Spänen. Diese werden in einem Wäscher (16) gewaschen, dann gesiebt, und bei Bedarf getrocknet. Dabei kann zur Förderung der Wirkung der nachfolgenden Elektronenbestrahlung eine Mindestfeuchte beibehalten werden. Beim Zerkleinern von Recycel- bzw. Gebrauchtholz kommt eine Zusatzvorrichtung (Magnet) zur Entfernung metallischer Fremdkörper zum Einsatz.

Es können ggf. geringe Mengen von Additiven, z. B. für eine Hydrophobierung oder zur Flammhemmung, zugegeben werden.

Anschließend werden die bestrahlten Späne einem Trockner (18) zugeführt. Der Trockner hat als solches einen herkömmlichen Aufbau.

Danach werden die so vorbereiteten Späne in einem Elektronenstrahlbeschleuniger (20) mit Beschleunigungsenergien im Bereich zwischen 5 und 10 MeV bestrahlt; mit jeweils als zweckmäßig gewählten Parametern bezüglich des Ausgangsrohmaterials und des betriebstechnischen Mengendurchsatzes (Schüttmenge und Schüttdichte). Die Dosis wird im Bereich von 50 bis 150 kGy entsprechend den als erforderlich ermittelten Behandlungsparametern für die nachfolgende Zubereitung der angestrebten Holzverbundwerkstoffmischung optimiert.

Trockner und Elektronenstrahlbeschleuniger können vertauscht werden. Die Bestrahlung kann also vor und/oder nach der Trocknung erfolgen. Dies hängt vom Feuchtigkeitsgehalt der Späne ab. Die Bestrahlung ist effektiver, wenn die Späne etwa 10 - 20 % feucht sind.

Der Ausgang (20a) des Elektronenstrahlbeschleunigers (20) ist an einer Siebablage (22) angeschlossen und die getrockneten Späne werden über Siebe (22a, 22b), die über einen Antrieb in der Horizontalebene gerüttelt werden, in 3 größenabhängige Fraktionen geteilt. Eine Grobfraktion wird übereinen Ausgang (24a) abgegeben, eine Mittelfraktion über einen Ausgang (24b) und eine Kleinfraktion über einen Ausgang (24c).

Ein Förderer (26) führt die Grob- und Mittelfraktionen einem Spandosierer (32)zu, die Feinfraktion gelangt über einen Förderer (28) in einen Spandosierer (30). Aus diesen Dosierern kommen die jeweiligen Späne in eine heiße Förderschnecke (34 bzw. 36). Aus diesen Förderschnecken (34 und 36) kommen die jeweiligen Fraktionen (Fein, Mittel und Grob) in die entsprechend zugeteilten Mischer (42)für Fein- bzw. in den Mischer (44) für Mittel- und Grob-Späne.

Aus einem Dosierer (40) erfolgt die Zugabe von Thermoplast-Pulver-Partikel mit Partikelgrößen im Bereich zwischen 1000 und 1500 µm in die Mischer (42,44), wo Späne und Thermoplast-Pulver vermischt werden.

Es können Bindemittel, wie Paraffin oder Stärke, im Dosierer oder im Mischer zugegeben werden.

Das Feinspan-Thermoplast-Pulvergemisch wird aus dem Mischer (42) in einen Deagglomerator (Auflockerer) (46), das Mittelspan-/Grobspangemisch aus dem Mischer (44) in einen Deagglomerator (48) überführt.

Zur Herstellung eines Vlieses erfolgt Beförderung der Mischung aus dem Deagglomerator (46) (Feinfraktion) sowohl in einen Unterschichtstreuer(50) über dessen Eingang (50a) als auch in einen Oberschichtstreuer(54)-über dessen Eingang (54a). Der Ausgang des anderen Deagglomerators (48) ist mit dem Eingang (52a) eines Mittelschicht-Streuers (52) verbunden.

Unterschichtstreuer, Mittelschichtstreuer und Oberschichtstreuer werden zeitlich und räumlich so gesteuert, dass unter ihnen ein Vlies (56) geformt wird mit einer Unterschicht (Feinspan), darüber einer Mittelschicht (Mittel- und Grobspan) und einer Oberschicht (Feinspan).

Über einen Förderer (58) langt das Vlies (56) in eine Vorheizung (60). Die Heiztemperaturen hängen vom gegebenen System ab. Beispielsweise kann die Heizung über HF(Hochfrequenz), IR (Infrarot) oder MW (Mikrowelle) erfolgen.

Danach wird das Vlies einer Presse (62) zugeführt, die beim dargestellten Ausführungsbeispiel eine Kühlpresse ist, also (im Unterschied zum Stand derTechnik) keine energie- und zeitaufwendige Heizung erfordert. In der Presse (62) wird das Vlies zu Platten (65) geformt und danach auf Größe geschnitten. (Optional kann eine weitere Verformung zu dreidimensionalen konstruktiven Produkten erfolgen). Die durch das Pressen geformten Platten (Produkte) (65) werden dann über spezielle, durch Röntgenschutz bedingte Transportstrecken in den Prozessraum eines Elektronenstrahlbeschleuniger (64) überführt und dort mit hochenergetischen Elektronen im Energiebereich von 1 bis 10 MeV sowie mit entsprechend gewählter Dosis bzw. Dosisrate an Luft bestrahlt, um die Vernetzung innerhalb der reaktiven synthetischen bzw. teilsynthetischen Polymermischung (insbesondere Thermoplastpulver und/oder Flüssigpolymere) durchzuführen sowie eine Haftung bzw. auch chemische Verbindung desselben mit dem zerkleinerten und vorbehandelten Holzrohmaterial bzw. dessen Bestandteilen (Zellulose, Lignin) etc. zu bewirken.

Ergebnis dieser Produktionstechnologie ist eine Spanplatte (bzw. ein speziell geformtes Produkt) mitsehrguten Eigenschaften, insbesondere hinsichtlich Klimawechselbeständigkeit, Hydrophobie, Formstabilität, Biegefestigkeit, Querzugfestigkeit, Gesundheitsschutz und Recycelbarkeit.

Das Verfahren ist insbesondere vorteilhaft hinsichtlich Energieeinsparung (geringes Aufheizerfordernis), Produktivität (geringer Zeitaufwand) und Umweltverträglichkeit etc.

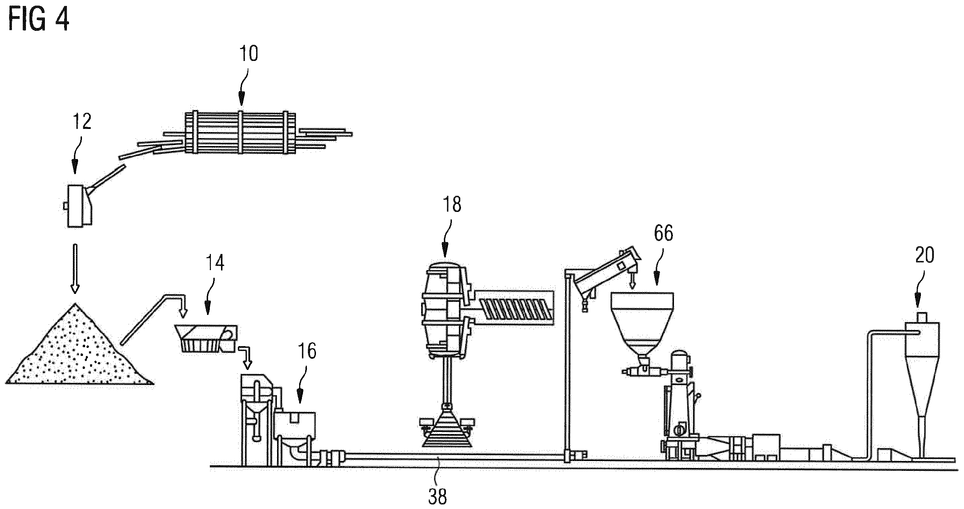

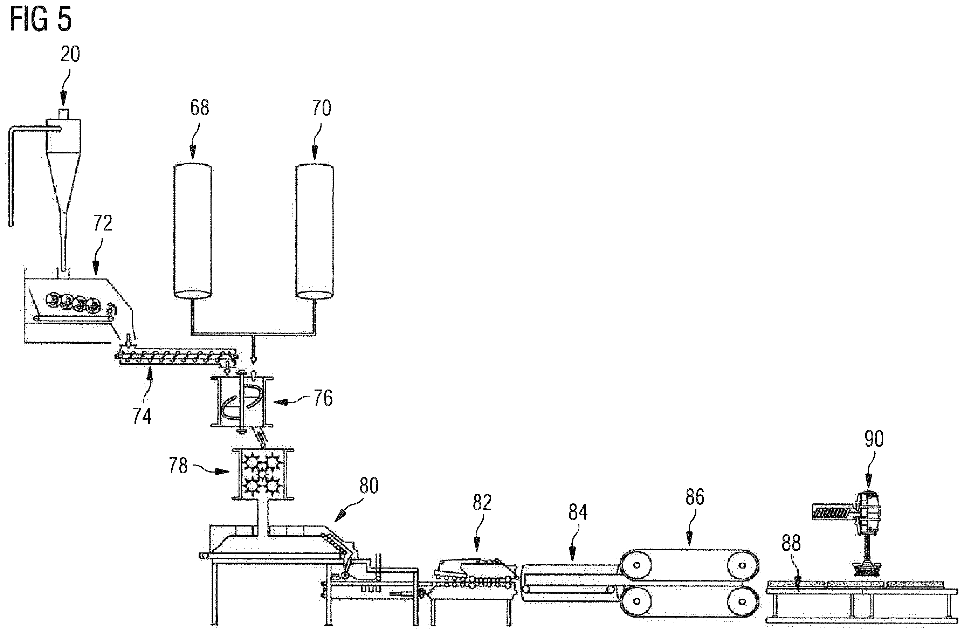

Nunmehr werden mit Bezug auf die Figuren 4 und 5 ein Verfahren und eine Vorrichtung zurHerstellungvonMDF-/HDF-Platten und WPC-Holzverbundwerkstoffen näher beschrieben.

In den Figuren betreffen gleiche Bezugszeichen einander entsprechende Komponenten.

Zerhacker (10), Zerspaner(12), Siebanlage (14), Wäscher(16) und Elektronenstrahler (18) entsprechen im Wesentlichen dem Ausführungsbeispiel gemäß Figur 1, wobei nunmehr die Prozessparameter (Zerspaner 12) so eingestellt sind, dass Holzfasern oder Fasern aus holzartigem Material für MDF/HDF-Platten oder WPC-Holzverbundwerkstoffe erzeugt werden.

Über einen Förderer (38) werden die elektronenbestrahlten Fasern einem sogenannten Defibrator (Faserauflockerer) (66) zugeführt (alssolches im Stand der Technik bekannt), von wo die Fasern in einen Trockner (20) kommen.

Gemäß Figur 5 werden die getrockneten Fasern vom Trockner 20 in einen Faser-Streuer (72) überführt, wo sie weiter aufgelockert und dosiert einer Förderschnecke (74) zugeführt werden, die vorzugsweise geheizt ist. Von dort gelangen die Fasern in einen Mischer (76).

An den Mischer (76) sind angeschlossen einerseits ein Dosierer (68) mit einer elektronenstrahlreaktiven synthetischen bzw. biobasierten Polymerflüssigkeit und andererseits ein Dosierer (70) mit einem Thermoplast-Pulvergemisch als gemeinsames Bindemittelgemisch für die Holzspäne.

Die Steuerung ermöglicht, je nach den gewünschten Eigenschaften der herzustellenden MDF/HDF-Platte, eine Zufuhr von Flüssigkeit und/oder Pulver in den Mischer (76).

Wird beispielsweise zur Herstellung einer MDF-Platte nur Pulver zugeführt, dann kann dies mit 10 bis 20 %, bezogen auf die Gesamtmasse, erfolgen.

Andererseits kann für einen WPC-Verbundwerkstoff der Pulveranteil auf 30 bis 35 % bemessen werden. (WPC: Wood-Polymer-Composites)

Das Gemisch kommt vom Mischer (76) in einen Deagglomerator(78), der gekühlt sein kann. Vom Deagglomerator (78) gelangt das Gemisch in einen Faser-Streuer (80), der (in an sich bekannter Weise) das Vlies formt, welches in einer weiteren Vlies-Formstation (82) für den Pressvorgang vorbereitet wird.

Eine Vorheizung (84), z.B. HF/MW, heizt das Vlies vor, welches anschließend in einer Presse (86) gepresst wird. Die Pressung erfolgt vorzugsweise ohne Aufheizung (kühl). Danach werden die Platten auf Größe geschnitten, (optional zu spezielle Produkten nachgeformt) und in einem Elektronenstrahlbeschleuniger (90) mit Elektronen, etwa im oben angegebenen Energie- bzw. Dosisbereich, bestrahlt zwecks Vernetzung der elektronenstrahlreaktiven Polymergemische inklusive Anbindung an die Holzbestandteile bzw. deren Oberflächen.

Die so hergestellten aus MDF/HDF-Platten oder WPC-Verbundwerkstoffe haben ähnliche Vorzüge wie die oben beschriebenen Spanplatten.

### Bezugszeichenliste

- 10: Zerhacker (Debaker)
- 12: Zerspaner (Chipper)
- 14: Siebanlage (Screen)
- 16: Wäscher (Washer)
- 18: Trockner (Dryer)
- 20: Elektronenstrahlbeschleuniger (Electron Beam Accelerator)
- 20a: Ausgang (von 20) (Exit from 20)
- 22: Siebanlage (Screen)
- 22a: Sieb, grob (Screen, large)
- 22b: Sieb, fein (Screen, small)
- 22c: Antrieb (Drive)
- 24a: Spanausgang (grob) (Chip exit large)
- 24b: Spanausgang (mittel) (Chip exit medium)
- 24c: Spanausgang (fein) (Chip exit small)
- 26: Förderer (für 24a, 24b) (Conveyor for 24a, 24b)
- 28: Förderer (für 24c) (Conveyor for 24c)
- 30: Spandosierer (Chip metering)
- 32: Spandosierer (Chip metering)
- 34: Förderschnecke (heiß) (Hot screw)
- 36: Förderschnecke (heiß) (Hot screw)
- 38: Förderer (Conveyor)
- 40: Dosierer (Metering)
- 42: Mischer (Mixer)
- 44: Mischer (Mixer)
- 46: Deagglomerator, insbesondere gekühlt(Deagglomerator, especially cooled)
- 50: Unterschichtstreuer (Bottom layer scattering)
- 50a: Eingang zu 50 von 46 (Entrance to 50 from 46)
- 52: Mittelschichtstreuer (Mid-layer scattering)
- 52a: Eingang zu 52 von 48 (Entrance to 52 from 48)
- 54: Oberschichtstreuer (Upper layer scattering)
- 54a: Eingang zu 54 von 46 (Entrance to 54 from 46)
- 56: Vlies (Fleece mat)
- 58: Förderer (Conveyor)
- 60: Vorheizung (HF/IR/MW) (Pre-heater)
- 62: Presse (Press)
- 64: Elektronenstrahler (Electron Beam Accelerator)
- 65: Platten (Plates)
- 66: Faserer (Defibrator) / Zerfaserer (Pulper)
- 68: Dosierer für Flüssigkeit (Doser for liquid)
- 70: Dosierer für Pulver (Doser for powder)
- 72: Faser-Streuer (Fiber scattering)
- 74: Förderheizschnecke (Heating screw)
- 76: Mischer (Mixer)
- 78: Deagglomerator (Deagglomerator)
- 80: Faser-Streuer (Fiber scattering)
- 82: Vlies-Formung (Mat formation)
- 84: Vorheizung (HF/MW) (Pre- heater)
- 86: Kühlpresse (Cooling press)
- 88: Förderer (Conveyor)
- 90: Elektronenstrahlbeschleuniger (Electron Beam Accelerator)

## Patentansprüche

1. Verfahren zum Herstellen einer Mischung aus lignocellulosehaltigen Partikeln mit elektronenstrahlreaktiven synthetischen Polymeren in Pulverform, insbesondere Thermoplasten, und/oder elektronenstrahlreaktiven synthetischen und/oder biobasiert teilsynthetischen polymeren Flüssigkeiten, bedarfsweise mit Lösemittelanteil, **gekennzeichnet durch**:
a) Bestrahlen der lignocellulosehaltigen Partikel vor dem Vermischen mit beschleunigten Elektronen im Energiebereich von Megaelektronenvolt (MeV), insbesondere in einer Größenordnung von 1 bis zu 10 MeV, vorzugsweise > 3 MeV < 8 MeV.

2. Verfahren nach Anspruch 1, **dadurch gekennzeichnet, dass** die lignocellulosehaltigen Partikel aus Holz oder nichtholzhaltigen Pflanzen oder aus einem Gemisch beider bestehen und dass diese als Späne, Fasern, Strands oder Flakes vorliegen.

3. Verfahren zum Herstellen eines lignocellulosehaltigen Formteils, folgende Schritte aufweisend:
a) Bestrahlen lignocellulosehaltiger Partikel im Energiebereich zwischen 1 MeV bis 10 MeV, vorzugsweise > 3 MeV < 8 MeV;
b) Mischen der bestrahlten lignocellulosehaltigen Partikel mit elektronenstrahlreaktivem pulverförmigen Polymer, insbesondere einem Thermoplast, mit Pulverpartikelgrößen < 2000 Mikrometer (µm), und/oder mit einer elektronenstrahlreaktives Polymer enthaltenden Flüssigkeit;
c) Formen der erzeugten Mischung entsprechend der Form des herzustellenden Holzverbundwerkstoffes, insbesondere Formen zu einem Vlies;
d) Erhitzen der geformten Mischung auf 100 - 180 °C;
e) Pressen der geformten Mischung; und
f) Bestrahlen der gepressten Mischung mit Elektronen im Energiebereich von 1 MeV bis 10 MeV.

4. Verfahren nach Anspruch 3, **dadurch gekennzeichnet, dass** im Schritt e) das Pressen kalt erfolgt.

5. Verfahren nach einem der vorhergehenden Ansprüche, **dadurch gekennzeichnet, dass** in Schritt a) das Bestrahlen mit einer Dosis zwischen 50 bis 150 kGy erfolgt, insbesondere mit einem Dosiseintrag von 100 kGy plus/minus 20 kGy.

6. Verfahren nach einem der Ansprüche 3 bis 5, **dadurch gekennzeichnet, dass** im Schritt f) das Bestrahlen je nach vorgegebener Mischungsrezeptur und gewähltem Produktziel mit einer Dosis von 50 bis 250 kGy erfolgt, insbesondere 100 kGy plus/minus 20 kGy.

7. Verfahren nach einem der Ansprüche 3 bis 6, **dadurch gekennzeichnet, dass** im Schritt e) ein Vlies zu einer Platte gepresst wird.

8. Verfahren nach einem der Ansprüche 3 bis 7, **dadurch gekennzeichnet, dass** im Schritt b) die Partikelgrößen im Bereich von 1000 bis 1500 Mikrometer (µm) liegen.

9. Verfahren nach einem der Ansprüche 3 bis 8, **dadurch gekennzeichnet, dass** in Schritt b) zur Herstellung eines Holzwerkstoffes 5 % bis < 30 % Masseanteile eines Polymers nach Anspruch 3 zugemischt werden.

10. Verfahren nach einem der Ansprüche 3 bis 8, **dadurch gekennzeichnet, dass** in Schritt b) zur Herstellung eines WPC 30 % bis 60 % Masseanteile eines Polymers nach Anspruch 3 zugemischt werden.

11. Verfahren nach einem der vorhergehenden Ansprüche, **dadurch gekennzeichnet, dass** in Schritt a) der Energiebereich zwischen 5 und 10 MeV liegt.

12. Verfahren nach einem der Ansprüche 3 bis 11, **dadurch gekennzeichnet, dass** im Schritt b) die lignocellulosehaltigen Partikel vor oder während der Zugabe des Thermoplast-Pulvers auf eine Temperatur von 60 °C bis 160 °C vorzugsweise auf 80 °C bis 120 °C erwärmt werden.

13. Verfahren nach einem der Ansprüche 3 bis 12, **dadurch gekennzeichnet, dass** vor oder im Schritt b) die lignocellulosehaltigen Partikel vor der Zugabe des Thermoplast-Pulvers mit einem Haftmittel beaufschlagt werden.

14. Verfahren nach Anspruch 13, **dadurch gekennzeichnet, dass** als Haftmittel Klebstoffe und/oder Paraffine, Stärken und/oder eiweißhaltige Stoffe verwendet werden.

15. Vorrichtung zum Vorbehandeln und von zur Mischung mit elektronenstrahlreaktivem Pulver aus einem Polymer und/oder einer elektronenstrahlreaktives Polymer enthaltenden Flüssigkeit geeigneten lignocellulosehaltigen Partikeln, aufweisend:
a) einen Elektronenstrahlbeschleuniger (20), eingerichtet in einer separaten und nach außen strahlengeschützten Prozesskammer zum Bestrahlen mittels einer Transportvorrichtung vorbeigeführter Partikel mit Elektronen im hochenergetischen Bereich > 1 MeV.

16. Vorrichtung zum Herstellen eines lignocellulosehaltige Partikel enthaltenden Verbundwerkstoffes, aufweisend:
a) einen Elektronenstrahlbeschleuniger (18), eingerichtet zum Bestrahlen der Partikel mit Elektronen im Energiebereich > 1 MeV;
b) zumindest einen Mischer (42, 44), eingerichtet zum Mischen der bestrahlten Partikel mit elektronenstrahlreaktivem Pulver aus einem synthetischen Polymer, insbesondere einem Thermoplast, mit Pulverpartikelgrößen < 2000 Mikrometer (µm), und/oder mit einer elektronenstrahlreaktives synthetisches Polymer enthaltenden Flüssigkeit;
c) eine Einrichtung (50, 52, 54), eingerichtet zum Formen der erzeugten Mischung entsprechend der Form des herzustellenden Verbundwerkstoffes, insbesondere zum Formen eines Vlieses;
d) eine Vorheizeinrichtung (60), eingerichtet zum Erhitzen der geformten Mischung auf 100 °C bis 180 °C;
e) eine Presse (62), eingerichtet zum Pressen der geformten Mischung; und
f) einen hochenergetischen Elektronenstrahlbeschleuniger (64) im Energiebereich von 1 MeV bis 10 MeV, eingerichtet in einer nach außen strahlengeschützten Prozesskammer zum Bestrahlen der mittels einer Transportvorrichtung vorbeigeführten gepressten und geformten Mischung.

17. Vorrichtung nach Anspruch 16, **dadurch gekennzeichnet, dass** die Presse gemäß Merkmal e) eine Kaltpresse oder eine Kühlpresse ist.

18. Vorrichtung nach einem der Ansprüche 16 oder 17, **dadurch gekennzeichnet, dass** der Elektronenstrahlbeschleuniger (64) gemäß Merkmal f) eingerichtet ist zum gleichmäßigen Bestrahlen der vorbeigeführten gepressten und geformten Mischung mit einer Dosis von 50 bis 250 kGy, insbesondere mit einer Dosis von 100 kGy plus/minus 20 kGy.

19. Vorrichtung nach einem der Ansprüche 16 bis 18, **dadurch gekennzeichnet, dass** der Elektronenstrahlbeschleuniger (20) gemäß Merkmal a) eingerichtet ist zum gleichmäßigen Bestrahlen mit einer Dosis von 50 bis 150 kGy, insbesondere mit einer Dosis von 100 kGy plus/minus 20 kGy.

20. Vorrichtung nach einem der Ansprüche 16 bis 19, **dadurch gekennzeichnet, dass** es sich bei der Mischvorrichtung um einen Universalmischer, einen Turbomischer, einen Pflugscharmischer, einen Freifallmischer, o. d. g. handelt.
